# EUROPEAN PATENT SPECIFICATION

(11) **EP 2 444 678 B1**
(45) Date of publication and mention of the grant of the patent: **17.08.2016**
(21) Application number: 11178781.8
(22) Date of filing: 25.08.2011
(51) Int. Cl.: F16B 25/00, F16B 25/10

(54) **A screw**
Schraube
Vis

(30) Priority: 25.10.2010 TW 099136370
(43) Date of publication of application: 25.04.2012
(73) Proprietor: Taiwan Shan Yin Int'l Co., Ltd., Kaohsiung City 806 (TW)
(72) Inventor: Su, Kou-Tsair, Kaohsiung City 806 (TW); Su, Yu-Jung, Kaohsiung City 806 (TW)
(74) Representative: Chaillot, Geneviève

(56) References cited:
- EP-A1- 0 824 198
- CH-A- 50 995
- DE-A1-102006 026 176
- GB-A- 2 127 927
- US-A1- 2009 169 334

## Description

### BACKGROUND OF THE INVENTION

### 1. Field of the Invention

The present invention relates to a fastener design, particularly to a screw.

A screw with the features of the preamble of claim 1 is known from document GB 2 127 927 A.

### 2. Description of the Related Art

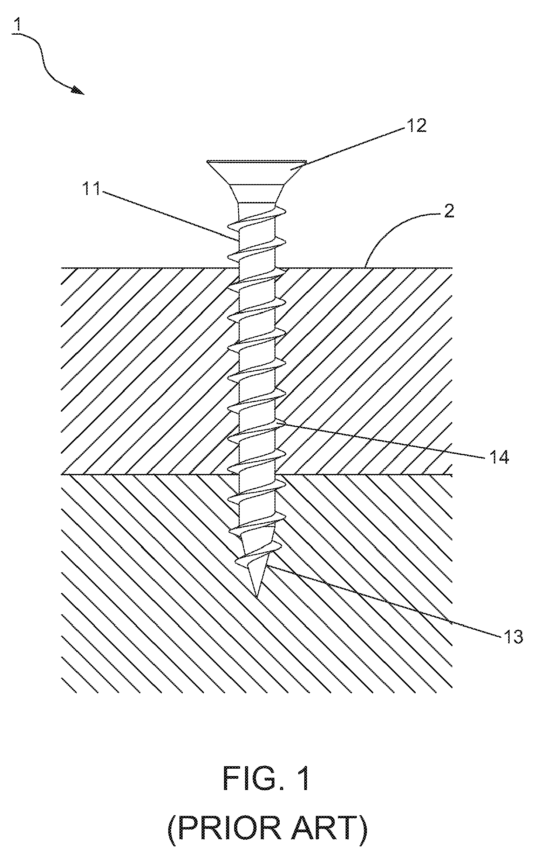

Referring to Fig. **1****,** a conventional screw **1** comprises a shank portion **11,** a head portion **12** disposed at one end of the shank portion **11,** a drilling portion **13** disposed at the other end of the shank portion **11,** and a plurality of threaded units **14** spirally disposed around the shank portion **11.** Wherein, the drilling portion **13** is formed into a tapered end. Thus, the screw **1** directly enters an object **2** via the tapered drilling portion **13,** and the following threaded units **14** continue entering the object **2** so as to achieve a fastening effect.

Afore screw **1** might be smoothly fastened into the object **2** by means of the drilling portion **13** piercing the object **2.** However, in practice, the object **2** is forcedly pierced by the tapered drilling portion **13.** Thus, fibers contained in the object **2** are difficult to be severed efficiently. That is to say, the fibers are just simply pushed and thrust by the tapered drilling portion **13,** so the screw **1** would be easily impeded by debris resulted from the object **2** in time of drilling. As a result, the debris can not be timely expelled, and the heaped debris incurs an increasing resistance on the screw **1.** Thereby, the operation of fastening the screw **1** is influenced.

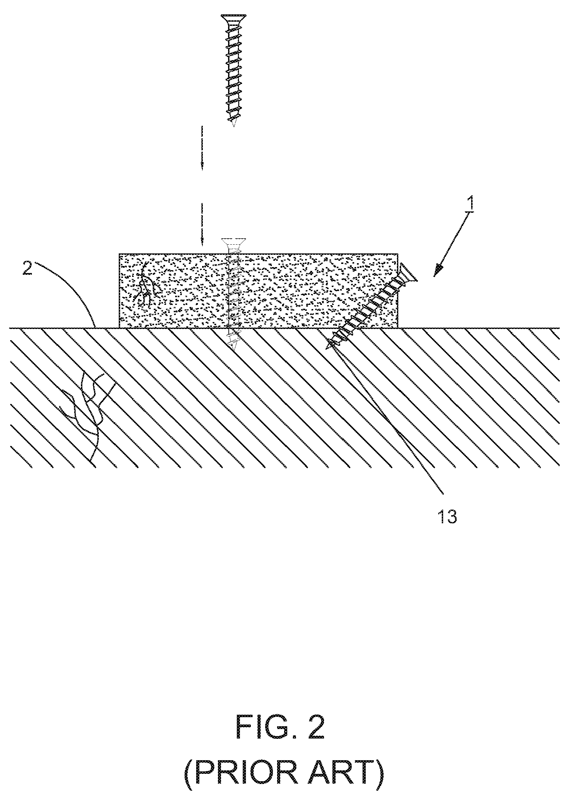

Referring to Fig. **2****,** the upright screw **1** in the object **2** might be subject to rustiness since water might pile on the head portion **12.** Therefore, in the practical application, the screw **1** is disposed tilting in the object **2.** Herein, if the cutting debris can not be timely expelled, the head portion **12** easily bulges out of the object **2** after screwing. Such abnormal operation is unbeneficial for further fastening. Therefore, the screw **1** needs improvements.

### SUMMARY OF THE INVENTION

It is therefore the purpose of this invention to provide a screw that is able to timely expel debris, efficiently decrease screwing resistance, and preferably promote screwing speed so as to allow the screw to be embedded in an object properly.

The screw in accordance with the present invention is defined by the features of claim 1.

Preferably, a threaded section including a plurality of auxiliary threaded units is disposed around the shank portion; the auxiliary threaded units are disposed between the threaded units; a first diameter of the auxiliary threaded units is smaller than a second diameter of the threaded units.

Preferably, a plurality of indented units are defined on the auxiliary threaded units; a plurality of channels are defined on a part of the threaded units.

Preferably, the positioning member is formed by a plurality of inclined walls that integrally bulge from the cutting planes to form a pyramid.

Preferably, the positioning member is structured by a cone that bulges from the cutting planes.

Preferably, the positioning member is formed by a plurality of inclined walls that are indented from the cutting planes, thereby resulting in a valley on the cutting planes; points are defined on convergences of the inclined walls and the cutting edge.

Accordingly, the cutting edge provides a scraping effect in time of drilling, and the cutting planes guide cutting debris to smoothly enter the channels between the threaded units so as to rapidly expel the cutting debris therefrom. Thereby, the cutting debris does not pile into the vacancy of the threaded units, so that the screwing torque could be decreased but the screwing speed could be enhanced. Moreover, the screw is favorably embedded in a screwing object without a protrudent part. Therefore, such even screwing object is beneficial to be further fastened.

### BRIEF DESCRIPTION OF THE DRAWINGS

Fig. **1** is a schematic view showing a conventional screw;
Fig. **2** is a schematic view showing the conventional screw;
Fig. **3** is a schematic view showing a first preferred embodiment of the present invention;
Fig. **4** is an end view of Fig. **3****;**
Fig. **5** is a schematic view showing a first embodiment not covered by the present invention the first preferred embodiment of the present invention in screwing;
Fig. **6** is a schematic view showing a second embodiment not covered by preferred embodiment of the present invention;
Fig. **7** is a perspective view showing a third embodiment not covered by preferred embodiment of the present invention;
Fig. **8** is a schematic view showing a fourth preferred embodiment of the present invention;
Fig. **9** is an end view of Fig. 8;
Fig. **10** is a schematic view showing a part of a fifth preferred embodiment of the present invention;

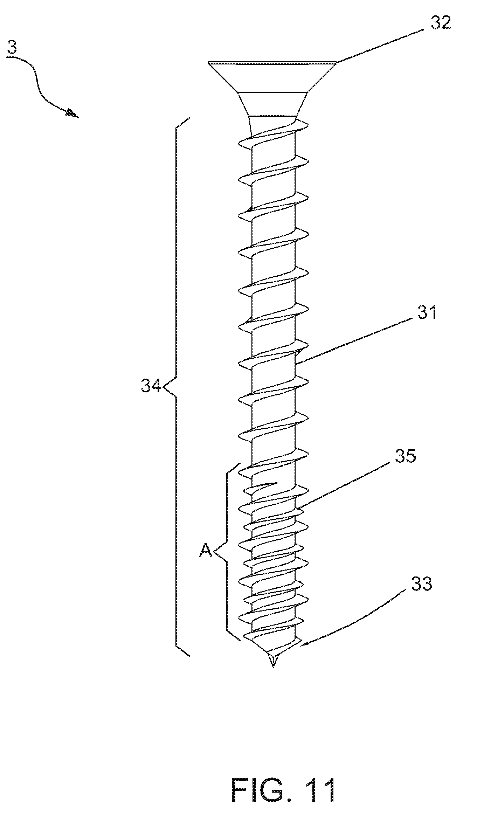

Fig. **11** is a schematic view showing a sixth preferred embodiment of the present invention;

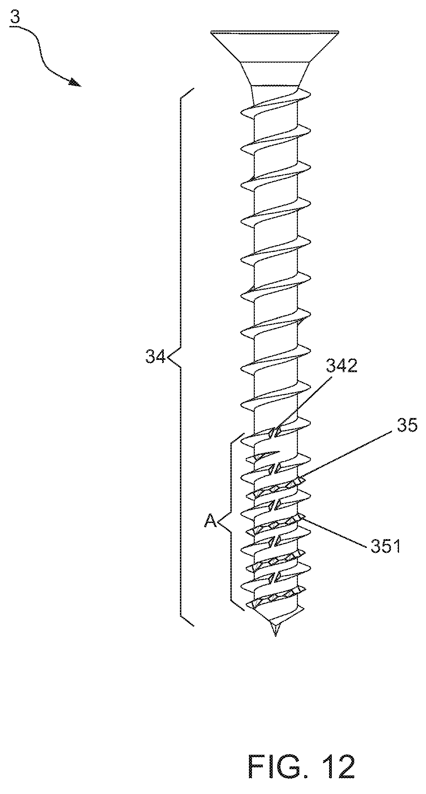

Fig. **12** is a schematic view showing a seventh preferred embodiment of the present invention;
Fig. **13** is a schematic view showing an eighth preferred embodiment of the present invention;
Fig. **14** is an end view of Fig. 13;

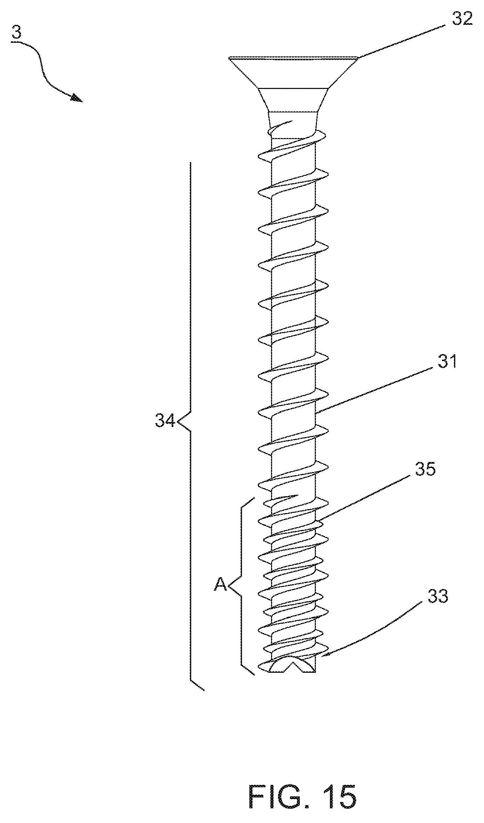

Fig. **15** is a schematic view showing a ninth preferred embodiment of the present invention; and

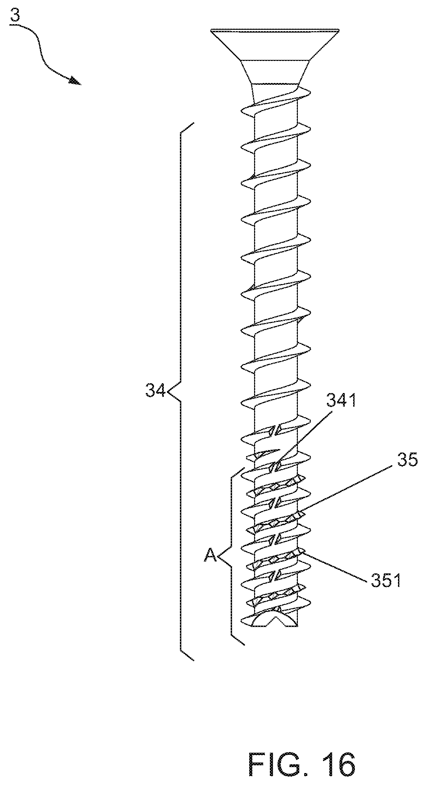

Fig. **16** is a schematic view showing a tenth preferred embodiment of the present invention.

### DETAILED DESCRIPTION OF THE PREFERRED EMBODIMENTS

Wherever possible, the same reference numbers are used in the drawings and the description to refer to the same or like parts.

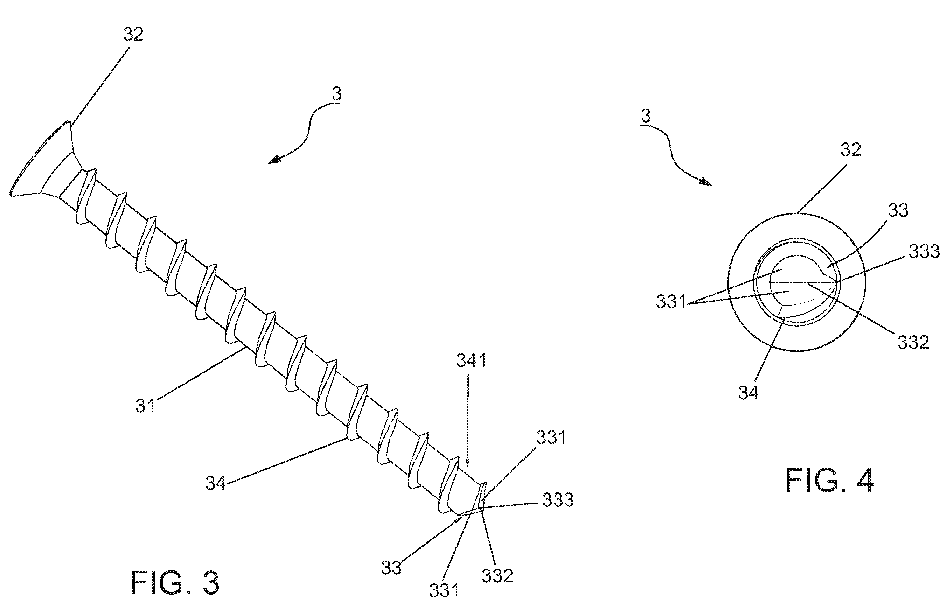

Referring to Fig. **3****,** a first embodiment preferred embodiment of the present invention is shown. In order to clearly show the features of the screw **3,** the screw **3** in this figure and in the following embodiments is presented by one side. A screw **3** comprises a shank portion **31,** a head portion **32** disposed at one end of the shank portion **31,** a drilling portion **33** disposed at the other end of the shank portion **31,** and a plurality of threaded units **34** surroundingly disposed around the shank portion **31.** Wherein, a channel **341** is defined between the threaded units **34.** Further referring to Fig. **4****,** two inclined cutting planes **331** are convergently formed on the drilling portion **33,** and a cutting edge **332** is formed on the convergence of the cutting planes **331.** Whereby, the cutting edge **332** preferably scrapes an object **4** in time of drilling. Moreover, while the threaded units **34** around the shank portion **31** extend to the cutting edge **332** and connect to an end **333** of the cutting edge **332,** the channel **341** is formed as an intercommunicated channel between the threaded units **34.**

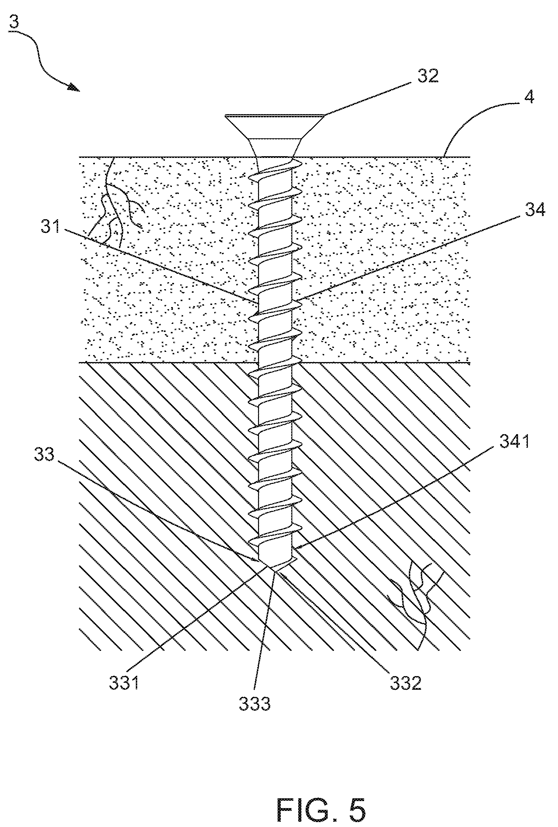

Referring to Figs. **3** and **5****,** in operation, the head portion **32** is imparted by a screwing torque for allowing the drilling portion **33** to enter the object **4** by means of the cutting edge **332** grazing the object **4** (shown as a composite board). Moreover, since the threaded units **34** extend and connect to the end **333** of the cutting edge **332,** a gradual screwing effect is brought about as soon as the cutting edge **332** contacts the object **4.** Obviously, the cutting edge **332** not only drills the object **4** but also rubs the object with a sharp progression. As to the inclined cutting planes **331,** they guide cutting debris generated in time of drilling to enter the threaded units **34.** Thereby, the cutting debris further travels into the channel **341** that is connected to the cutting planes **331.** Accordingly, the cutting debris is promptly removed through the channels **341.** Thus, there is no redundant cutting debris obstructing and compressing the vacancy between the screw and the object. Therefore, embedded in the object **4,** the screw **3** is able to provide a stable fastening effect. Favorably, however the screw **3** is positioned upright or slanted, a firm and stationary positioning effect of the screw **3** in the object **4** could be ensured, and the screw **3** does not protrude out of the object **4.** As a result, the object **4** has a smooth appearance for a further combination.

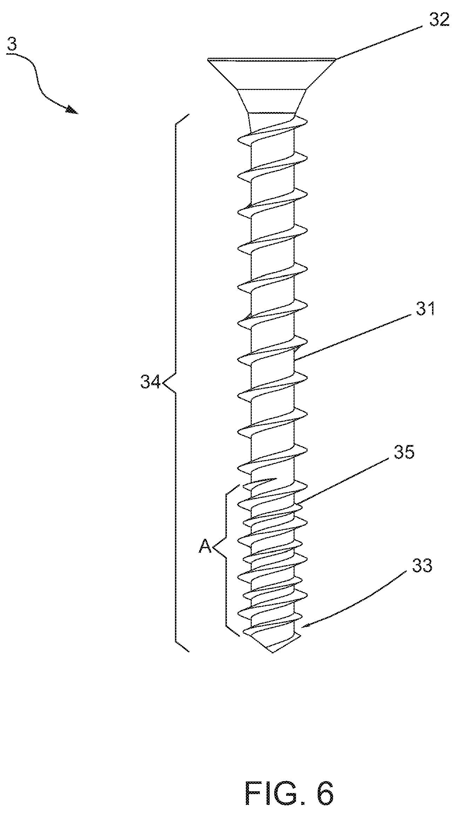

Referring to Fig. **6****,** a second preferred embodiment is shown. The screw **3** similarly comprises a shank portion **31,** a head portion **32,** a drilling portion **33,** and a plurality of threaded units **34.** The correlations and functions are also alike to those in the first preferred embodiment. Namely, a firm embedding and a stationary combination are still preferably achieved. In this embodiment, a threaded section **A** is further defined on the shank portion **31.** Wherein, the threaded section **A** is composed of a plurality of auxiliary threaded units **35** that are surroundingly disposed between the threaded units **34.** Additionally, a first diameter of the auxiliary threaded units **35** is smaller than a second diameter of the threaded units **34.** Accordingly, a high-low threaded screw **3** is resulted from the threaded units **34** and the auxiliary threaded units **35.** Such high-low threaded units are beneficial to accelerate the expelling speed for the cutting debris, decrease the drilling resistance, and remove the obstruction resulted from redundant cutting debris. Favorably, the screw **3** could be smoothly fastened into the object **4** and could be firmly embedded in the same without any protrudent part.

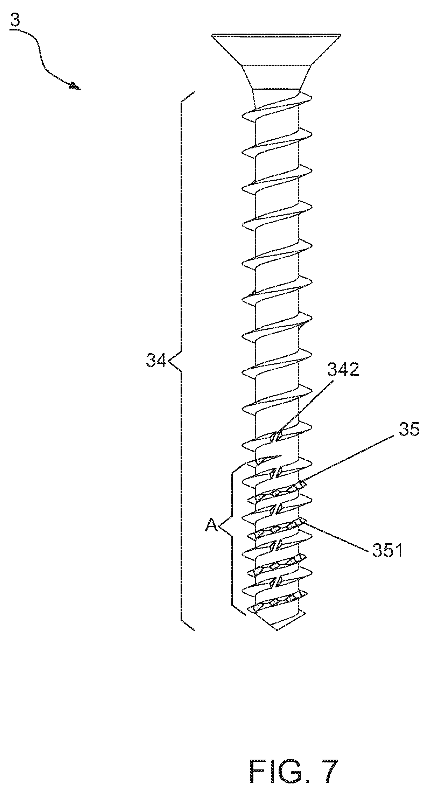

Referring to Fig. **7****,** a third embodiment preferred embodiment of the present invention is shown. The difference between this embodiment and afore two embodiments is that a plurality of indented units **351** are defined on the auxiliary threaded unit **35.** Further, a plurality of slots **342** are positioned on the threaded units **34** for cooperating with the indented units **351.** Whereby, a drilling effect and a concurrent severing function could be brought about on the drilling portion **33,** which enhances the cutting efficiency and the fastening performance. Favorably, the cutting debris is still timely expelled, which allows the friction and the torque in time of drilling to be largely reduced. Thus, the screw **3** is preferably embedded in the object **4,** and a firm and stationary fastening performance is achieved.

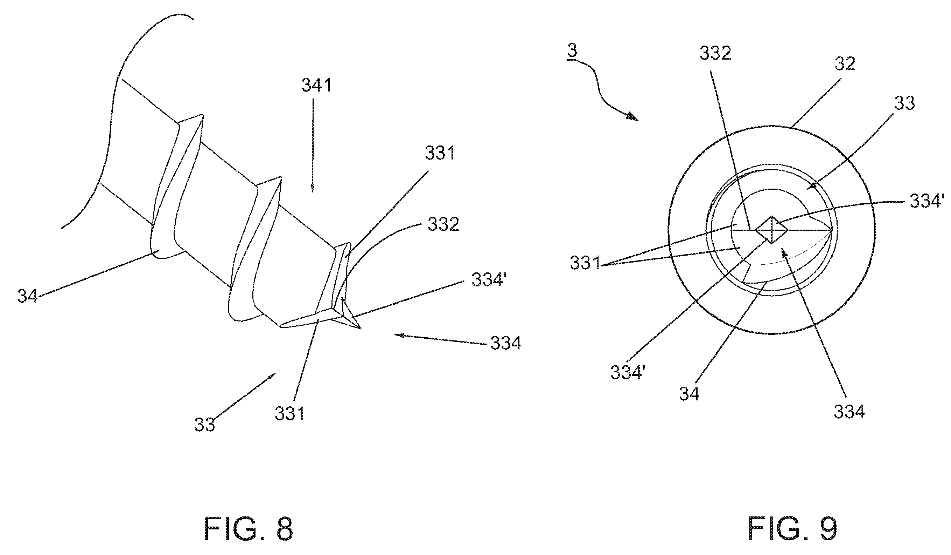

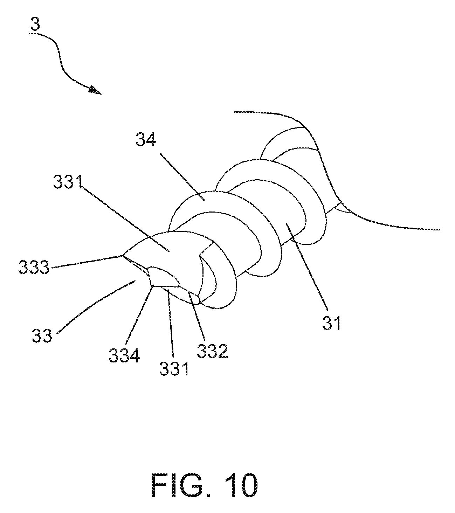

Referring to Figs. **8** and **9****,** a fourth preferred embodiment of the present invention is shown. Similar to afore embodiments, the screw **3** correlatively comprises the shank portion **31,** the head portion **32,** the drilling portion **33,** and the threaded units **34.** Differently, a positioning member **334** is formed on the cutting planes **331** for accurately positioning the cutting edge **332** on the object (not shown) . In this embodiment, the positioning member **334** is assembled by a plurality of inclined walls **334'** that bulge from the cutting planes **331** so as to contribute to a pyramid. In the figures, there are four inclined walls **334'** forming a square pyramid. Alternatively, while the positioning member **334** is structured by a cone that also bulges from the cutting planes **331,** an oblate cone could be especially defined on the cutting planes **331** as preferably shown in Fig. **10****.** Accordingly, however the positioning member **334** is designed outward protrudent from the cutting planes **331,** the positioning member **334** provides a precise positioning effect on the object in time of drilling. Namely, the plane cutting edge **332** avoids slanting the screw **3** during the screwing in view of the positioning member **334.** Afterward, the subsequent entrance of the screw **3** is gradual , which further stabilizes the screw **3,** and the drilling resistance is likely reduced and the screwing torque is also decreased as afore embodiments.

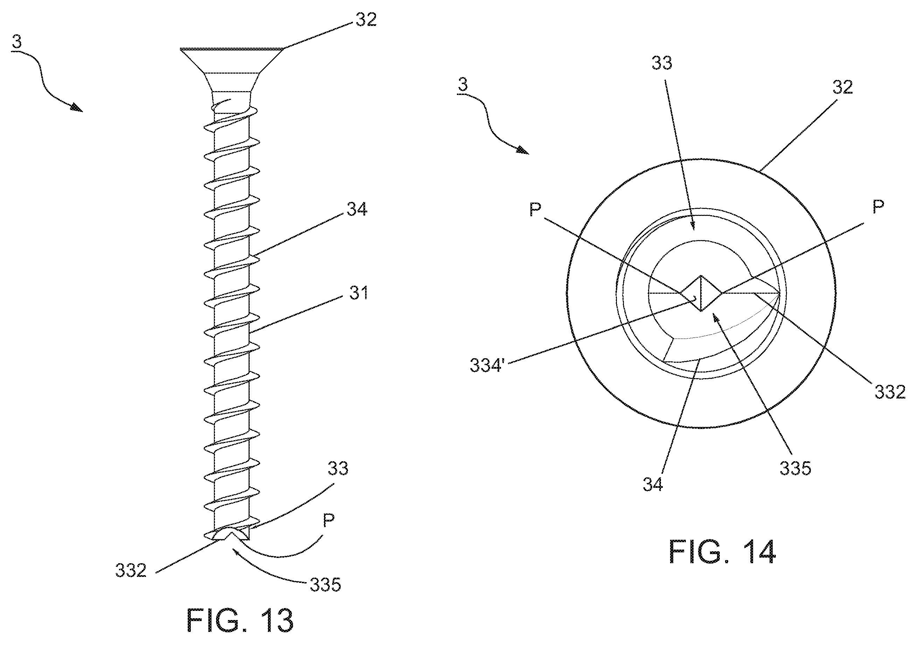

Referring to Figs. **13** and **14****,** an eighth preferred embodiment is shown. In order to clearly show the features of the screw **3,** the screw **3** in these figures and in the following embodiments are shown by another sides different from those of afore embodiments. Wherein, the screw **3** similarly comprises the shank portion **31,** the head portion **32,** the drilling portion **33,** and the threaded units **34.** Differently, the positioning member **334** is surroundingly assembled by a plurality of inclined walls **334'** that are indented on the cutting planes **331,** thereby contributing to a valley **335** thereon. Additionally, points P are defined on convergences of the inclined walls **334'** and the cutting edge **332.** Accordingly, this embodiment utilizes the points **P** formed on the cutting edge **332** to support the flat cutting edge **332** and the cutting planes **331** on the object (not shown) in time of drilling, so that an accurate positioning effect is attainable. Further by the cooperation of the cutting edge **332** and the threaded units **34,** the screw **3** could be drilled in the object with an appropriate speed. A certain cutting effect and a clear debris guiding effect are also obtainable for concurrently decreasing the screwing torque. As a result, the screw **3** is able to provide a speedy fastening effect and a concealing screwing result.

To sum up, the present invention in particularly utilizes the two cutting planes convergently formed on the drilling portion to cooperate with a cutting edge formed at the convergence of the two cutting planes, thereby speedily removing the cutting debris generated in time of drilling via the cutting planes and the channel between the threaded units. Accordingly, no redundant cutting debris would pile the vacancy between the screw and the object, so the drilling torque could be decreased, but the drilling speed could be enhanced. Thus, the screw of the present invention could be firmly and smoothly embedded in the object for a further combination.

While we have shown and described the embodiment in accordance with the present invention, it should be clear to those skilled in the art that further embodiments may be made without departing from the scope of the present invention.

## Claims

1. A screw (3) comprising a shank portion (31), a head portion (32) disposed at one end of said shank portion (31), a drilling portion (33) disposed at the other end of said shank portion (31), and a plurality of threaded units (34) spirally disposed around said shank portion (31);
wherein two inclined cutting planes (331) are formed on said drilling portion (33) and are connected at a cutting edge (332),
**characterized in that** said two inclined cutting planes (331) are formed on said drilling portion (33) without passing across said threaded units (34), said threaded units (34) extending toward said cutting edge (332) and a terminal thread of said threaded units directly connecting to one end (333) of said cutting edge (332), wherein a positioning member (334) is formed on said cutting planes (331) for positioning said cutting edge (332) in time of cutting.

2. The screw (3) as claimed in claim 1, wherein, a threaded section (A) including a plurality of auxiliary threaded units (35) is disposed around said shank portion (31) for said auxiliary threaded units to be disposed between said threaded units (34), and a first diameter of said auxiliary threaded units (35) is smaller than a second diameter of said threaded units (34).

3. The screw as claimed in claim 2, wherein, a plurality of indented units (351) are defined on said auxiliary threaded units (35); a plurality of slots (342) are defined on a part of said threaded units (34).

4. The screw (3) as claimed in claim 1, wherein, said positioning member (334) is formed by a plurality of inclined walls (334') that integrally bulge outwards from said cutting planes (331) to form a pyramid.

5. The screw (3) as claimed in claim 2, wherein, said positioning member (334) is formed by a plurality of inclined walls (334') that integrally bulge outwards from said cutting planes (331) to form a pyramid.

6. The screw (3) as claimed in claim 3, wherein, said positioning member (334) is formed by a plurality of inclined walls (334') that integrally bulge outwards from said cutting planes (331) to form a pyramid.

7. The screw (3) as claimed in claim 1, wherein, said positioning member (334) is structured by a cone that bulges outwards from said cutting planes (331).

8. The screw (3) as claimed in claim 2, wherein, said positioning member (334) is structured by a cone that bulges outwards from said cutting planes (331).

9. The screw (3) as claimed in claim 3, wherein, said positioning member (334) is structured by a cone that bulges outwards from said cutting planes (331).

10. The screw (3) as claimed in claim 1, wherein, said positioning member (334) is formed by a plurality of inclined walls (334') that are indented inwards from said cutting planes (331) for forming a valley (335) on said cutting planes (331), and each of said inclined walls (334') and said cutting edge (332) are converged at a point (P).

11. The screw (3) as claimed in claim 2, wherein, said positioning member (334) is formed by a plurality of inclined walls (334') that are indented inwards from said cutting planes (331) for forming a valley (335) on said cutting planes (331), and each of said inclined walls (334') and said cutting edge (332) are converged at a point (P).

12. The screw (3) as claimed in claim 3, wherein, said positioning member (334) is formed by a plurality of inclined walls (334') that are indented inwards from said cutting planes (331) for forming a valley (335) on said cutting planes (331), and each of said inclined walls (334') and said cutting edge (332) are converged at a point (P).

## Patentansprüche

1. - Schraube (3), die folgendes umfasst: einen Schaftabschnitt (31), einen Kopfabschnitt (32), der an einem Ende des Schaftabschnitts (31) angeordnet ist, einen Bohrabschnitt (33), der am anderen Ende des Schaftabschnitts (31) angeordnet ist und eine Mehrzahl von Gewindeeinheiten (34), die spiralförmig um den Schaftabschnitt (31) angeordnet sind;
worin zwei geneigte Schnittebenen (331) auf dem Bohrabschnitt (33) ausgebildet und an einer Schnittkante (332) verbunden sind,
**dadurch gekennzeichnet, dass** zwei geneigte Schnittebenen (331) am Bohrabschnitt (33) ausgebildet sind, ohne über die Gewindeeinheiten (34) zu verlaufen, wobei sich die Gewindeeinheiten (34) zur Schnittkante (332) hin erstrecken und ein Anschlussgewinde der Gewindeeinheiten direkt mit einem Ende (333) der Schnittkante (332) verbunden ist, worin ein Positionierungsglied (334) auf den Schnittebenen (331) zur Positionierung der Schnittkante (332) beim Schneiden ausgebildet ist.

2. - Schraube (3) nach Anspruch 1, worin ein Gewindeabschnitt (A), der eine Mehrzahl von Hilfsgewindeeinheiten (35) behinhaltet, um den Schaftabschnitt (31) angeordnet ist, zur Anordnung der Hilfsgewindeeinheiten zwischen den Gewindeeinheiten (34) und ein erster Durchmesser der Hilfsgewindeeinheiten (35) kleiner ist, als ein zweiter Durchmesser der Gewindeeinheiten (34).

3. - Schraube nach Anspruch 2, worin eine Mehrzahl eingeschnittener Einheiten (351) auf den Hilfsgewindeeinheiten (35) definiert sind; eine Mehrzahl von Schlitzen (342) auf einem Teil der Gewindeeinheiten (34) definiert sind.

4. - Schraube (3) nach Anspruch 1, worin das Positionierungsglied (334) durch eine Mehrzahl von geneigten Wänden (334') gebildet ist, die von den Schnittebenen (331) aus fest verbunden nach außen hervortreten, um eine Pyramide zu formen.

5. - Schraube (3) nach Anspruch 2, worin das Positionierungsglied (334) durch eine Mehrzahl geneigter Wände (334') gebildet ist, die von den Schnittebenen (331) aus fest verbunden nach außen hervortreten, um eine Pyramide zu formen.

6. - Schraube (3) nach Anspruch 3, worin das Positionierungsglied (334) durch eine Mehrzahl geneigter Wände (334') gebildet wird, die von den Schnittebenen (331) aus fest verbunden nach außen hervortreten, um eine Pyramide zu formen.

7. - Schraube (3) nach Anspruch 1, worin das Positionierungsglied (334) durch einen Kegel strukturiert ist, der von den Schnittebenen (331) aus nach außen hervortritt.

8. - Schraube (3) nach Anspruch 2, worin das Positionierungsglied (334) durch einen Kegel strukturiert ist, der von den Schnittebenen (331) aus nach außen hervortritt.

9. - Schraube (3) nach Anspruch 3, worin das Positionierungsglied (334) durch einen Kegel strukturiert ist, der von den Schnittebenen (331) aus nach außen hervortritt.

10. - Schraube (3) nach Anspruch 1, worin das Positionierungsglied (334) von einer Mehrzahl geneigter Wände (334') gebildet ist, die von den Schnittebenen (331) aus nach innen eingeschnitten sind, um eine Kerbe (335) auf den Schnittebenen (331) zu bilden und jede der geneigten Wände (334') und die Schnittkante (332) in einem Punkt (P) zusammenlaufen.

11. - Schraube (3) nach Anspruch 2, worin das Positionierungsglied (334) von einer Mehrzahl geneigter Wände (334') gebildet ist, die von den Schnittebenen (331) aus nach innen eingeschnitten sind, um eine Kerbe (335) auf den Schnittebenen (331) zu bilden und jede der geneigten Wände (334') und die Schnittkante (332) in einem Punkt (P) zusammenlaufen.

12. - Schraube (3) nach Anspruch 3, worin das Positionierungsglied (334) von einer Mehrzahl geneigter Wände (334') gebildet ist, die von den Schnittebenen (331) aus nach innen eingeschnitten sind, um eine Kerbe (335) auf den Schnittebenen (331) zu bilden und jede der geneigten Wände (334') und die Schnittkante (332) in einem Punkt (P) zusammenlaufen.

## Revendications

1. - Vis (3) comprenant une partie tige (31), une partie tête (32) disposée à une extrémité de ladite partie tige (31), une partie de perçage (33) disposée à l'autre extrémité de ladite partie tige (31), et une pluralité d'unités filetées (34) disposées en spirale autour de ladite partie tige (31) ;
deux plans de coupe inclinés (331) étant formés sur ladite partie de perçage (33) et étant reliés au niveau d'un bord de coupe (332),
**caractérisée par le fait que** lesdits deux plans de coupe inclinés (331) sont formés sur ladite partie de perçage (33) sans passer à travers lesdites unités filetées (34), lesdites unités filetées (34) s'étendant vers ledit bord de coupe (332) et un filet terminal desdites unités filetées se reliant de manière directe à une extrémité (333) dudit bord de coupe (332), un élément de positionnement (334) étant formé sur lesdits plans de coupe (331) pour positionner ledit bord de coupe (332) au moment de la coupe.

2. - Vis (3) selon la revendication 1, dans laquelle une section filetée (A) comprend une pluralité d'unités filetées auxiliaires (35) disposées autour de ladite partie tige (31) pour que lesdites unités filetées auxiliaires soient disposées entre lesdites unités filetées (34), et un premier diamètre desdites unités filetées auxiliaires (35) est plus petit qu'un second diamètre desdites unités filetées (34).

3. - Vis (3) selon la revendication 2, dans laquelle une pluralité d'unités dentelées (351) est définie sur lesdites unités filetées auxiliaires (35) ; une pluralité de fentes (342) sont définies sur une partie desdites unités filetées (34).

4. - Vis (3) selon la revendication 1, dans laquelle ledit élément de positionnement (334) est formé par une pluralité de parois inclinées (334') qui font saillie vers l'extérieur d'un seul tenant à partir desdits plans de coupe (331) pour former une pyramide.

5. - Vis (3) selon la revendication 2, dans laquelle ledit élément de positionnement (334) est formé par une pluralité de parois inclinées (334') qui font saillie vers l'extérieur d'un seul tenant à partir desdits plans de coupe (331) pour former une pyramide.

6. - Vis (3) selon la revendication 3, dans laquelle ledit élément de positionnement (334) est formé par une pluralité de parois inclinées (334') qui font saillie vers l'extérieur d'un seul tenant à partir desdits plans de coupe (331) pour former une pyramide.

7. - Vis (3) selon la revendication 1, dans laquelle ledit élément de positionnement (334) est structuré par un cône qui fait saillie vers l'extérieur à partir desdits plans de coupe (331).

8. - Vis (3) selon la revendication 2, dans laquelle ledit élément de positionnement (334) est structuré par un cône qui fait saillie vers l'extérieur à partir desdits plans de coupe (331).

9. - Vis (3) selon la revendication 3, dans laquelle ledit élément de positionnement (334) est structuré par un cône qui fait saillie vers l'extérieur à partir desdits plans de coupe (331).

10. - Vis (3) selon la revendication 1, dans laquelle ledit élément de positionnement (334) est formé par une pluralité de parois inclinées (334') qui sont dentelées vers l'intérieur à partir desdits plans de coupe (331) pour former une vallée (335) sur lesdits plans de coupe (331), et chacune des parois inclinées (334') et ledit bord de coupe (332) convergent en un point (P).

11. - Vis (3) selon la revendication 2, dans laquelle ledit élément de positionnement (334) est formé par une pluralité de parois inclinées (334') qui sont dentelées vers l'intérieur à partir desdits plans de coupe (331) pour former une vallée (335) sur lesdits plans de coupe (331), et chacune desdites parois inclinées (334') et ledit bord de coupe (332) convergent en un point (P).

12. - Vis (3) selon la revendication 3, dans laquelle ledit élément de positionnement (334) est formé par une pluralité de parois inclinées (334') qui sont dentelées vers l'intérieur à partir desdits plans de coupe (331) pour former une vallée (335) sur lesdits plans de coupe (331), et chacune desdites parois inclinées (334') et ledit bord de coupe (332) convergent en un point (P).
